# EUROPÄISCHE PATENTSCHRIFT

(11) **EP 1 161 673 B1**
(45) Veröffentlichungstag und Bekanntmachung des Hinweises auf die Patenterteilung: **24.08.2005**
(21) Anmeldenummer: 00916751.1
(22) Anmeldetag: 16.02.2000
(51) Int. Cl.: G01N 21/00

(54) **FLUORESZENZKORRELATIONSSPEKTROSKOPIEVORRICHTUNG UND -VERFAHREN, INSBESONDERE ZUR MEHRFARBENFLUORESZENZKORRELATIONSSPEKTROSKOPIE**
DEVICE AND METHOD FOR FLUORESCENCE CORRELATION SPECTROSCOPY, ESPECIALLY FOR MULTICOLOUR FLUORESCENCE CORRELATION SPECTROSCOPY
PROCEDE ET DISPOSITIF DE SPECTROSCOPIE A CORRELATION DE FLUORESCENCE, NOTAMMENT POUR SPECTROSCOPIE A CORRELATION DE FLUORESCENCE POLYCHROME

(30) Priorität: 18.02.1999 DE 19907011
(43) Veröffentlichungstag der Anmeldung: 12.12.2001
(73) Patentinhaber: Deutsches Krebsforschungszentrum Stiftung des öffentlichen Rechts, 69120 Heidelberg (DE)
(72) Erfinder: LANGOWSKI, Jörg, D-69120 Heidelberg (DE)
(74) Vertreter: Castell, Klaus
(86) Internationale Anmeldenummer: PCT/DE2000/000438
(87) Internationale Veröffentlichungsnummer: WO 2000/049389

(56) Entgegenhaltungen:
- WO-A-91/17832
- WO-A-97/45730
- DE-A- 2 527 770
- DE-A- 4 405 375
- DE-A- 19 735 119
- US-A- 4 200 802
- US-A- 4 432 642
- PATENT ABSTRACTS OF JAPAN vol. 014, no. 389 (P-1095), 22. August 1990 (1990-08-22) & JP 02 147840 A (RES DEV CORP OF JAPAN;OTHERS: 02), 6. Juni 1990 (1990-06-06)

## Beschreibung

Die Erfindung betrifft eine Vorrichtung und ein Verfahren zur Fluoreszenzkorrelationsspektroskopie, insbesondere zur Mehrfarbenfluoreszenzkorrelationsspektroskopie. Hierbei werden Reaktionspartner mit Fluoreszenzfarbstoffen markiert und in einem flüssigen, transparenten Medium frei diffundieren gelassen. Auftretende Fluktuationen der Fluoreszenzintensität können mit optischen Verfahren detektiert werden. Insbesondere bei der Mehrfarbenfluoreszenzkorrelationsspektroskopie werden molekulare Wechselwirkungen untersucht, indem zwei Reaktionspartner mit unterschiedlichen Fluoreszenzfarbstoffen markiert werden. Die Reaktionspartner erzeugen bei ihrer Diffusion durch das transparente Medium Fluktuationen der Fluoreszenzintensität. Werden überwiegend korrelierte Intensitätsfluktuationen zwischen den Emissionswellenlängen der beiden Fluorophore detektiert, so deutet dieses auf eine Komplexbildung zwischen den beiden Partnern hin.

Bei Fluoreszenzkorrelationsspektroskopie werden typischerweise kleinste Probenmengen verwendet, da sich das untersuchbare Raumvolumen auf einen Raumbereich in unmittelbarer Umgebung des Fokusses, auf welchen die Lichtstrahlen fokussiert werden, beschränkt.

Die Druckschrift US 4,200,802 zeigt eine Fluoreszenzspektroskopievorrichtung mit einem einzelnen Probengefäß, das mit einem fokussierenden, verspiegelten Boden und einer lichtdurchlässigen Abdeckplatte versehen ist. Gemäß D1 stellt das Probengefäß eine Durchflußzelle dar, in der die Proben eine nach der anderen durchgeführt werden.

Um einerseits die Verwendung kleinster Probenmengen und andererseits eine nahezu fließbandartige Probenpräparation und routinemäßige Durchführung der Messungen zu ermöglichen, ist gemäß dem Kennzeichen des Anspruchs 1 ein Gefäßhalter vorgesehen, in welchem zumindest zwei Probengefäße mit einem fokussierenden, verspiegelten Boden angeordnet sind, und eine gemeinsame Abdeckung für beide Probengefäße umfaßt, die zumindest teilweise lichtdurchlässig ist und die zumindest zwei Stempel aufweist, die jeweils in ein Probengefäß hineinragen.

Eine derartige Vorrichtung läßt sich auch in kleinsten Abmessungen mit ausreichender Genauigkeit fertigen, so dass kleinste Probenvolumina innerhalb derartiger, kleiner Probengefäße für eine Messung zur Verfügung stehen. Insofern kann auf diese Weise eine Mikrotiterplatte mit einer Vielzahl von Probegefäßen, wie diese beispielsweise aus der DE 44 05 375 A1 bzw. aus der US 4,432,642 für gänzlich andere Anwendungszwecke bekannt sind, bereitgestellt werden, die dann jedoch für Fluoreszenzkorrelationsspektroskopische Messungen zur Anwendung kommen können. Darüber hinaus ermöglicht die Anordnung mehrerer Probengefäße in einem Gefäßhalter, dass diese ohne Weiteres gleichzeitig bzw. kurz hintereinander für eine Messung vorbereitet werden können. Auch ist es möglich, die entsprechende Meßapparatur mit einer Haltevorrichtung bzw. Transportvorrichtung für den Gefäßhalter zu versehen, so dass der Inhalt der jeweiligen Probengefäße ohne weiteren Aufwand hintereinander oder sogar gleichzeitig einer Messung zugeführt werden kann. Die auf diese Weise beschriebene, erfindungsgemäße Anordnung ermöglicht somit aufgabengemäß einerseits die Verwendung kleinster Probenmengen und ermöglicht andererseits eine nahezu fließbandartige Probenpräparation bzw. Durchführung der Messung.

Durch den fokussierenden, verspiegelten Boden ist es darüber hinaus möglich, die anregenden Lichtstrahlen senkrecht in das transparente Medium einfallen zu lassen und sie erst innerhalb des Mediums zum Fokus hin abzulenken. Hierdurch können Meßfehler, die durch unterschiedliche Brechungsindizes und verschiedene Frequenzen des eingestrahlten Lichtes bedingt sind, vermieden bzw. auf ein Minimum reduziert werden.

Vorteilhafterweise wird das Probengefäß soweit gefüllt, dass es die Abdeckung erreicht. Auf diese Weise ist gewährleistet, dass ein Lichteinfall in das Probengefäß lediglich von der Abdeckungsgeometrie und nicht von irgendwelchen Oberflächenspannungen des transparenten Mediums oder ähnlichem abhängt.

Ein konstruktiv verhältnismäßig einfacher Aufbau der Gesamtanordnung folgt, wenn die Probengefäße durch Ausformungen in dem Gefäßhalter gebildet werden. Bei einer derartigen Anordnung ist es möglich, den Gefäßhalter einstückig auszubilden und mit jedem geeigneten Verfahren Vertiefungen in denselben einzubringen, die als Probengefäße dienen. Hierbei ist lediglich der Boden dieser Ausformungen in erfindungsgemäßer Weise fokussierend auszubilden.

Der Boden kann hierbei parabolisch oder auch elliptisch geformt sein. Ebenso ist in bestimmten Grenzen ein halbkugelschalenförmiger Boden denkbar.

Um eine langfristige Haltbarkeit der Verspiegelung zu gewährleisten, kann der Boden mit einer gegenüber üblichen Pufferlösungen resistenten Schicht verspiegelt werden.

Hierbei sollte der Fokus des Probengefäßes derart gewählt sein, dass er innerhalb des Probengefäßes liegt. Bei einer derartigen Anordnung kann auf komplexe Optiken, die das einfallende Licht vorab in geeigneter Weise ablenken, verzichtet werden, wodurch insbesondere auch die Gefahr von Meßfehlern durch unterschiedliche Brechungswinkel reduziert wird.

Insbesondere soll der Fokus unterhalb der Abdeckung bzw. unterhalb des Stempels vorgesehen sein.

An jedem Probengefäß kann ein Druckausgleich vorgesehen sein. Ein derartiger Druckausgleich ermöglicht es, einerseits jedes Probengefäß in beliebiger Weise zu füllen oder zu entleeren und/oder andererseits zu gewährleisten, dass Baugruppen, wie eine Abdeckung bzw. ein in der Abdeckung vorgesehenes Lichtfenster in die in dem Probengefäß erhaltene Flüssigkeit eintauchen bzw. vollständig von dieser benetzt werden können. Wie bereits vorstehend erläutert, ermöglicht diese Benetzung bzw. dieses Eintauchen, dass die Oberflächenrichtung der Flüssigkeit nicht zufällig sondern durch die Oberfläche der Abdeckung bzw. die Oberfläche eines Lichtfensters bestimmt wird. Es versteht sich, dass ein derartiger Druckausgleich auch unabhängig von den übrigen Merkmalen der erfindungsgemäßen Vorrichtung vorteilhaft für eine Vorrichtung zur Fluoreszenzkorrelationsspektroskopie Anwendung finden kann.

In vorliegendem Zusammenhang wird unter dem Begriff "Lichtfenster" eine Baugruppe bzw. ein Bereich der Abdeckung verstanden, durch welchen Licht zur Fluoreszenzanregung durch die Abdeckung hindurch in ein jeweiliges Probengefäß gestrahlt wird.

Beispielsweise kann die Abdeckung als planparallele Platte ausgebildet sein, die auf dem Gefäßhalter plan aufliegt und die Probengefäße abdeckt. Hierbei besteht jedoch in der Regel die Schwierigkeit, die darunterliegenden Gefäße zumindest derart vollständig mit dem flüssigen Medium zu füllen, dass wenigstens die jeweiligen Lichtfenster benetzt sind. Durch geeignete Maßnahmen, wie Abdichtungen, genaue Dosierungen und Beherrschung der Adhäsions- und Kohäsionskräfte lassen sich diesbezüglich Wege finden.

Diese Probleme lassen sich vermeiden, wenn an der Abdeckung ein Stempel vorgesehen ist, der jeweils in ein Probengefäß hineinragt. Durch den Spalt zwischen Stempel und Probengefäßwand kann nunmehr ein Druckausgleich stattfinden, so dass das Probengefäß nicht mehr mit allerhöchster Genauigkeit befüllt werden muß. Etwaige Luft bzw. zuviel vorhandenes transparentes Medium können an den Seiten abgeführt werden. Insbesondere kann durch einfache Maßnahmen, wie beispielweise kleine Kanäle oder Ablauflöcher, vermieden werden, dass transparentes Medium in benachbarte Probengefäße gelangt.

Vorteilhafterweise sind die Lichtfenster der Abdeckung jeweils in den Stempeln vorgesehen.

Die Stempel können einerseits einstückig mit der Abdeckung ausgestaltet sein. Andererseits ist es möglich, dass die Stempel durch Enden von Lichtleitfasern gebildet werden, die mit der Abdeckung verbunden sind und durch diese hindurch in die Probengefäße hineinragen.

Vorteilhafterweise ist der Stempel derart dimensioniert, dass zwischen ihm und dem Probengefäß ein um den Stempel umlaufender Spalt verbleibt. Dieser Spalt wird ausreichend groß gewählt, so dass kein transparentes Medium aus dem Probengefäß herausströmt, wenn der Stempel in das Probengefäß eintaucht und seine Meßposition erreicht. Der durch diesen Spalt gebildete Raum dient somit als Puffer, der verschiedene Füllmengen, insbesondere im Rahmen einer Meßgenauigkeit, ausgleichen kann.

Es versteht sich, dass ein derartiger, in ein Probengefäß eintauchender Stempel auch unabhängig von den übrigen Merkmalen bei einem einzelnen Probengefäß für eine Fluoreszenzkorrelationsspektroskopie vorteilhaft Verwendung finden kann. Insbesondere braucht dann das Probengefäß nicht mit einem genau bemessenem Füllvolumen befüllt zu werden. Dieses ist insbesondere bei kleinen Probenmengen von großem Vorteil, da bei diesen um so schwerer genaue Volumina abgemessen werden können. Insofern ermöglicht ein derartiger Stempel auch unabhängig von den übrigen Merkmalen, dass bei kleinsten Probenmengen mit verhältnismäßig großen Toleranzen und somit unter verhältnismäßig unkomplizierten und schnell ausführbaren Bedingungen Messungen durchgeführt werden können.

Auch schlägt die Erfindung ein Verfahren zur Fluoreszenzkorrelationsspektroskopie, insbesondere zur Mehrfarbenfluoreszenzkorrelationsspektroskopie, vor, bei dem Lichtstrahlen in einem transparenten Medium fokussiert werden, welches sich in einem Probengefäß befindet. Hierbei wird in das Probengefäß, welches einen fokussierenden Boden aufweist, ein Stempel mit einem dem Boden zugewandten Lichtfenster eingeführt und die Menge des transparenten Medium derart gewählt, dass das Lichtfenster des Stempels von dem Medium benetzt wird.

Vorteilhafterweise wird der Stempel lediglich bis oberhalb des Fokusses in das Probengefäß eingeführt, so dass durch das Lichtfenster einfallendes Licht durch den Boden in den Fokus fokussiert werden kann und dort, in dem transparenten Medium, eine gewünschte Messung initiiert.

Das Verfahren gestaltet sich besonders einfach, wenn der Stempel in das transparente Medium eintaucht. Auf diese Weise ist in jedem Falle eine ausreichende Benetzung gewährleistet.

Weist der Stempel einen zur optischen Achse des fokussierenden Probengefäßbodens senkrechten Oberflächenbereich auf, so wird auf einfache, konstruktive Weise gewährleistet, dass durch den Stempel einfallendes Licht nicht unnötigerweise gebrochen wird. Hierdurch lassen sich Fehler, die durch Licht verschiedener Frequenzen bedingt sind, vermeiden.

Es versteht sich, dass die im vorliegenden Zusammenhang angesprochenen geometrischen Verhältnisse, wie "senkrecht", "elliptisch" bzw. "parabolisch" und ähnliches, lediglich im Rahmen der für die Fluoreszenzkorrelationsspektroskopie gewünschten Meßgenauigkeiten exakt gewählt werden brauchen. Insbesondere der Boden sollte auf einen Bruchteil der verwendeten Wellenlängen genau gefertigt sein. Auch die Abweichungen der Abdeckung, des Stempels bzw. der geometrischen Lage des Lichtfensters sind entsprechend der verwendeten Wellenlängen größer oder kleiner zu wählen.

Es ist darüber hinaus möglich, in der Wandung des Probengefäßes eine Öffnung vorzusehen, die in eine Zuführleitung und/oder eine Abführleitung für das transparente Medium mündet. Derartige Leitungen können beispielsweise durch einfache Bohrungen in dem Gefäßhalter gewährleistet sein. Ebenso könnten an der Gefäßhalteroberfläche unmittelbar unter der Abdeckung Nuten vorgesehen werden, die, wenn durch die Abdeckung abgedeckt, derartige Kanäle bilden. Derartige schlichte Öffnungen bzw. derartige Kanäle können auch in kleinsten Geometrien ohne Weiteres mit bereits bekannten technischen Verfahren in einem Gefäßhalter bereitgestellt werden. Derartige Leitungen können einerseits einem Druckausgleich und andererseits einer Zufuhr bzw. Abfuhr des transparenten Mediums oder aber auch anderer Substanzen, wie Meßsubstanzen oder Reinigungssubstanzen, dienen.

Da bei derartigen, schlichten Öffnungen auf jegliche konstruktive Feinheiten, wie kapillarartigen Zuführungen bis in den Fokus hinein und ähnliches, verzichtet wird, sind derartige Anordnungen auch bei kleinsten Probengefäßgrößen realisierbar. Auch diese fördern eine schnelle und serielle Durchführung der Fluoreszenzkorrelationsspektroskopie, wobei es sich versteht, dass derartige Öffnungen auch unabhängig von der Zahl der verwendeten Probengefäße und dem Vorhandensein einer Abdeckung vorteilhaft Verwendung finden können.

Weitere Vorteile, Ziele und Eigenschaften vorliegender Erfindung werden anhand der Beschreibung anliegender Zeichnung erläutert, in welcher beispielhaft zwei erfindungsgemäße Vorrichtungen zur Fluoreszenzkorrelationsspektroskopie dargestellt sind. In der Zeichnung zeigen:
- Figur 1: einen schematischen Schnitt durch eine erste erfindungsgemäße Vorrichtung und
- Figur 2: einen schematischen Schnitt durch eine zweite erfindungsgemäße Vorrichtung.

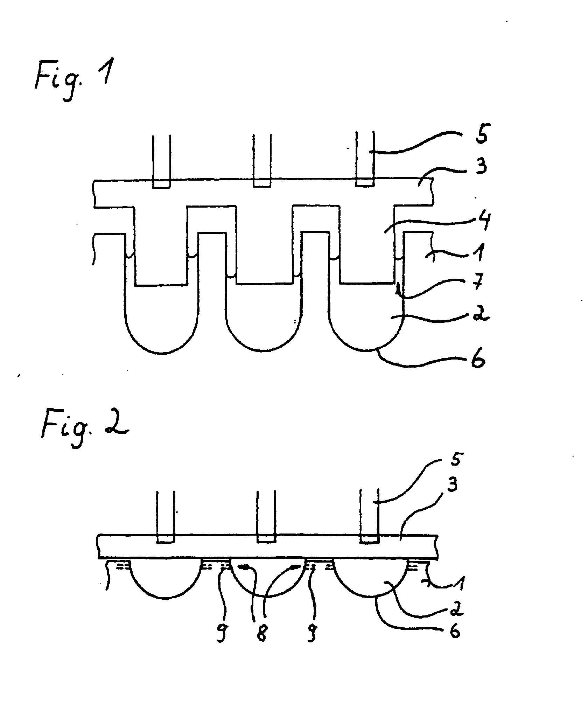

Die in Figur 1 dargestellte erste Ausführungsform der Erfindung weist einen Gefäßhalter 1 auf, in welchen Ausformungen als Probengefäße 2 (exemplarisch beziffert) eingebracht sind. Darüber hinaus umfaßt diese Ausführungsform eine Abdeckung 3 mit durchsichtigen Stempeln 4 (exemplarisch beziffert), die in abgedecktem Zustand in die Probengefäße 2 hineinragen.

Auf der gegenüberliegenden Seite der Abdeckung 3 sind Lichtleiter 5 (exemplarisch beziffert) vorgesehen, durch welche Licht durch die Stempel 4 hindurch in die Probengefäße 2 und aus diesen herausgeleitet werden kann. Es versteht sich, dass die Lichtleiter 5 auch statt der Stempel 4 vorgesehen sein können und durch die Abdeckung 3 hindurch in die Probengefäße 2 hineinragen können.

Der Boden 6 (exemplarisch beziffert) eines jeden Probengefäßes ist fokussierend ausgeformt und an seiner Innenseite mit einer gegenüber üblichen Pufferlösungen resistenten Schicht verspiegelt.

Zum Betrieb dieser Vorrichtung werden die Probengefäße 2 nach Bedarf mit einem transparenten Medium befüllt. Dieses geschieht soweit, dass nach Aufsetzen der Abdeckung 3 die Stempel 4 jeweils in das transparente Medium eintauchen. Insofern dient der zwischen Probengefäß 2 und Stempel 4 vorhandene Spalt 7 (exemplarisch beziffert) als Druckausgleich und als Zwischenspeicher für zuviel eingefülltes transparentes Medium.

Dadurch dass die Unterseite der Stempel 7 einen zur optischen Achse des fokussierenden Probengefäßbodens 6 senkrechten Oberflächenbereich aufweist und dass Licht aus dem Lichtleiter 5 annähernd senkrecht durch ein in diesem Oberflächenbereich befindliches Lichtfenster in das Probengefäß 2 gelangt, braucht die Abdeckung 3 nicht sehr genau bezüglich der Probengefäße 2 positioniert werden. Leichte seitliche Abweichungen spielen wegen des parallelen Lichteinfalls und des entsprechend fokussierend gewählten Bodens 6 keine Rolle.

Bei der in Figur 2 dargestellten Ausführungsform sind in einem Gefäßhalter 1 Probengefäße 2 (exemplarisch beziffert) mit fokussierenden, verspiegelten Böden 6 (exemplarisch beziffert) vorgesehen. Auf dem Gefäßhalter 1 liegt eine Abdeckung 3 mit einer planen Unterseite auf, in welche den Probengefäßen 2 entsprechend Lichtleiter 5 (exemplarisch beziffert) eingebracht sind. Darüber hinaus sind in jeder Probengefäßwand Öffnungen 8 (exemplarisch beziffert) vorgesehen, die in Zufuhr- bzw. Abfuhrleitungen 9 (exemplarisch beziffert) münden. Diese dienen einerseits als Druckausgleich bzw. Überlauf und verhindern auf diese Weise, dass bei Auflegen der Abdeckung 3 transparentes Medium über die Probengefäßwandung hinaus in andere Probengefäße 2 gelangt. Bei aufgelegter Abdeckung 3 können diese Leitungen 9 darüber hinaus dafür genutzt werden, Probenflüssigkeit auszutauschen bzw. die Probengefäße 2 zu spülen.

Die Leitungen 9 können einerseits durch Bohrungen (wie dargestellt) bereitgestellt werden. Andererseits können in der Oberseite des Gefäßhalters 1 Nuten oder andere Ausnehmungen vorgesehen sein, die gemeinsam mit der Abdeckung 3 die Leitungen 9 bilden. Es ist denkbar, eine der Öffnungen 8 im Bodenbereich des Probengefäßes 2 vorzusehen.

Die Durchmesser der Öffnungen 8 und der Leitungen 9 sowie deren Lage sind derart gewählt, dass ein vollständiges Befüllen der Probengefäße möglich ist. Wie aus Figur 2 unmittelbar ersichtlich, ist es auch möglich, die Lichtleiter 5 durch die Abdeckung 3 bis in die Probengefäße 2 hindurchzuführen. Dann ist ein vollständiges Befüllen der Probengefäße 2 nicht mehr notwendig.

## Patentansprüche

1. Fluoreszenzkorrelationsspektroskopievorrichtung, insbesondere Mehrfarbenfluoreszenzkorrelationsspektroskopievorrichtung, bei der Lichtstrahlen in einem transparenten Medium fokussiert werden, welches sich in einem Probengefäß (2) befindet, **gekennzeichnet durch** einen Gefäßhalter (1), in welchem zumindest zwei Probengefäße (2) mit einem fokussierenden, verspiegelten Boden (6) angeordnet sind, und **durch** eine gemeinsame Abdeckung (3) für beide Probengefäße (2), die zumindest teilweise lichtdurchlässig ist und die zumindest zwei Stempel (4) aufweist, die jeweils in ein Probengefäß (2) hineinragen.

2. Vorrichtung nach Anspruch 1, **dadurch gekennzeichnet, dass** die Probengefäße (2) durch Ausformungen in dem Gefäßhalter (1) gebildet sind.

3. Vorrichtung nach einem der Ansprüche 1 bis 2, **dadurch gekennzeichnet, dass** der Fokus innerhalb der Probengefäße (2) liegt.

4. Vorrichtung nach einem der Ansprüche 1 bis 3, **dadurch gekennzeichnet, dass** jedes Probengefäß (2) einen Druckausgleich aufweist.

5. Vorrichtung nach einem der Ansprüche 1 bis 4, **dadurch gekennzeichnet, dass** zumindestens ein Stempel (4) derart dimensioniert ist, dass zwischen dem Stempel (4) und dem Probengefäß (2) ein um den Stempel (4) umlaufender Spalt (7) verbleibt.

6. Vorrichtung nach einem der Ansprüche 1 bis 5, **dadurch gekennzeichnet, dass** zumindest ein Stempel (4) einen zur optischen Achse des fokussierenden Probengefäßbodens (6) senkrechten Oberflächenbereich aufweist.

7. Vorrichtung nach einem der Ansprüche 1 bis 6, **dadurch gekennzeichnet, dass** in der Wandung des Probengefäßes (2) eine Öffnung (8) vorgesehen ist, die in eine Zufuhr- und/oder Abfuhrleitung für das transparente Medium mündet.

8. Fluoreszenzkorrelationsspektroskopieverfahren, insbesondere Mehrfarbenfluoreszenzkorrelationsspektroskopieverfahren, bei dem Lichtstrahlen in einem transparenten Medium fokussiert werden, welches sich in einem Probengefäß (2) befindet, **dadurch gekennzeichnet, dass** in das Probengefäß (2), welches einen fokussierenden Boden (6) aufweist, ein Stempel (4) mit einem dem Boden (6) zugewandten Lichtfenster eingeführt und **dass** die Menge des transparenten Mediums derart gewählt wird, dass das Lichtfenster des Stempels (4) von dem Medium benetzt wird.

9. Verfahren nach Anspruch 8, **dadurch gekennzeichnet, dass** der Stempel (4) bis oberhalb des Fokusses des Bodens (6) eingeführt wird.

10. Verfahren nach Anspruch 8 oder 9, ***dadurch gekennzeichnet, dass*** der Stempel (4) in das transparente Medium eintaucht.

## Claims

1. A fluorescence correlation spectroscopy device, more specifically a multicolour fluorescence correlation spectroscopy device, in which light is focused in a transparent medium held in a sample container (2), **characterized by** a container holder (1) in which there are disposed at least two sample containers (2) having a focusing, metal-coated bottom (6) and by a common cover (3) for covering the two sample containers (2), said cover being at least partially translucent and comprising at least two rams (4) respectively projecting into one sample container (2).

2. The device as set forth in claim 1, **characterized in that** the sample containers (2) are formed by wells in the container holder (1).

3. The device as set forth in any of the claims 1 through 2, **characterized in that** the focus lies within the sample containers (2).

4. The device as set forth in any of the claims 1 through 3, **characterized in that** each sample container (2) comprises a pressure-compensating device.

5. The device as set forth in any of the claims 1 through 4, **characterized in that** at least one ram (4) is dimensioned such that between said ram (4) and the sample container (2) there remains a gap (7) surrounding said ram (4).

6. The device as set forth in any of the claims 1 through 5, **characterized in that** at least one ram (4) comprises a surface region that is normal to the optical axis of the focusing bottom (6) of the sample container.

7. The device as set forth in any of the claims 1 through 6, **characterized in that** in the wall of the sample container (2) there is provided an opening (8) that opens out into a transparent medium feed and/or discharge line.

8. A fluorescence correlation spectroscopy method, more specifically a multicolour fluorescence correlation spectroscopy method, in which light is focused in a transparent medium held in a sample container (2), **characterized in that** a ram (4) with a window for passage of light that is turned toward the bottom (6) is introduced into the sample container (2) comprising a focusing bottom (6) and that the amount of transparent medium is chosen to allow said window of the ram (4) to be wetted by the medium.

9. The method as set forth in claim 8, **characterized in that** the ram (4) is introduced until it is located above the focus of the bottom (6).

10. The method as set forth in claim 8 or 9, **characterized in that** the ram (4) immerses into the transparent medium.

## Revendications

1. Dispositif pour la spectroscopie à corrélation de fluorescence, notamment dispositif pour la spectroscopie à corrélation de fluorescence à plusieurs couleurs, dans lequel les rayons lumineux sont focalisés dans un fluide transparent contenu dans un récipient (2) destiné à recevoir un échantillon, **caractérisé par** un support (1) pour récipient dans lequel sont disposés au moins deux récipients (2) destinés à recevoir un échantillon et munis d'un fond (6) focalisant argenté et par un couvercle (3) commun aux deux récipients (2) destinés à recevoir un échantillon, lequel couvercle est du moins en partie translucide et comporte au moins deux mandrins (4) faisant chacun saillie dans un récipient (2) destiné à recevoir un échantillon.

2. Dispositif selon la revendication 1, **caractérisé en ce que** les récipients (2) destinés à recevoir un échantillon sont formés par des évidements pratiqués dans le support (1) pour récipient.

3. Dispositif selon l'une quelconque des revendications 1 à 2, **caractérisé en ce que** le point focal se situe à l'intérieur des récipients (2) destinés à recevoir un échantillon.

4. Dispositif selon l'une quelconque des revendications 1 à 3, **caractérisé en ce que** chaque récipient (2) destiné à recevoir un échantillon comporte un compensateur de pression.

5. Dispositif selon l'une quelconque des revendications 1 à 4, **caractérisé en ce qu'**au moins un mandrin (4) est dimensionné de manière à ménager, entre le mandrin (4) et le récipient (2) destiné à recevoir un échantillon, une fente (7) entourant le mandrin (4).

6. Dispositif selon l'une quelconque des revendications 1 à 5, **caractérisé en ce qu'**au moins un mandrin (4) comporte une portion de surface perpendiculaire à l'axe optique du fond (6) focalisant du récipient destiné à recevoir un échantillon.

7. Dispositif selon l'une quelconque des revendications 1 à 6, **caractérisé en ce qu'**un orifice (8) est ménagé dans la paroi du récipient (2) destiné à recevoir un échantillon, cet orifice débouchant dans une conduite d'amenée et/ou d'évacuation du fluide transparent.

8. Procédé de spectroscopie à corrélation de fluorescence, notamment dispositif pour la spectroscopie à corrélation de fluorescence à plusieurs couleurs, dans lequel les rayons lumineux sont focalisés dans un fluide transparent contenu dans un récipient (2) destiné à recevoir un échantillon, **caractérisé en ce que** l'on introduit dans le récipient (2) destiné à recevoir un échantillon muni d'un fond (6) focalisant un mandrin (4) avec une fenêtre pour le passage de la lumière tournée vers le fond (6) et que l'on veille à ce que la quantité de fluide transparent suffise à mouiller la fenêtre pour le passage de la lumière du mandrin (4).

9. Procédé selon la revendication 8, **caractérisé en ce que** l'on introduit le mandrin (4) jusqu'au dessus du point focal du fond (6).

10. Procédé selon la revendication 8 ou 9, **caractérisé en ce que** l'on immerge le mandrin (4) dans le fluide transparent.
